Europäisches Patentamt

European Patent Office

Office européen des brevets

(19)

(11) **EP 1 207 191 B1**

(12) **EUROPEAN PATENT SPECIFICATION**

(45) Date of publication and mention
of the grant of the patent:
**21.09.2005 Bulletin 2005/38**

(51) Int Cl.[7]: **C10J 3/16**, C10J 3/20,
C10J 3/72, F23G 5/027

(21) Application number: **01126577.4**

(22) Date of filing: **14.07.1995**

(54) **Fixed-bed gasification furnace and method for the gasification of organic waste**

Festbettvergaser und Verfahren zur Vergasung von organischen Abfällen

Gazéificateur à lit fixe et méthode de gazéification de déchets organiques

(84) Designated Contracting States:
**BE DE ES FR GB IT NL**

(30) Priority: **01.12.1994 JP 29818894**

(43) Date of publication of application:
**22.05.2002 Bulletin 2002/21**

(62) Document number(s) of the earlier application(s) in
accordance with Art. 76 EPC:
**95111105.3 / 0 693 539**

(73) Proprietor: **MITSUBISHI JUKOGYO KABUSHIKI
KAISHA
Tokyo 100 (JP)**

(72) Inventors:
• **Arima, Kenichi, Nagasaki R&D Center
Nagasaki-shi, Nagasaki-ken (JP)**
• **Soda, Masahiro, Nagasaki R&D Center
Nagasaki-shi, Nagasaki-ken (JP)**
• **Yamamoto, Hisao
Nagasaki-shi, Nagasaki-ken (JP)**
• **Sakai, Masayasu
Nagasaki-shi, Nagasaki-ken (JP)**
• **Ohta, Hideaki, Nagasaki R&D Center
Nagasaki-shi, Nagasaki-ken (JP)**
• **Fujioka, Yuichi, Nagasaki R&D Center
Nagasaki-shi, Nagasaki-ken (JP)**

(74) Representative: **Behrens, Dieter
Wuesthoff & Wuesthoff
Patent- und Rechtsanwälte
Schweigerstrasse 2
81541 München (DE)**

(56) References cited:
**EP-A- 0 297 425        US-A- 4 321 877
US-A- 5 094 669**

## EP 1 207 191 B1

**Description**

BACKGROUND OF THE INVENTION

1. Field of the Invention

The present invention generally relates to combustion of organic waste and, more specifically, to a fixed-bed gasification furnace for gasifying organic waste such as scrap tires and waste plastics, and a method for gasifying organic waste by using such a furnace.

2. Description of the Related Art

Conventionally, organic waste such as scrap tires and waste plastics has been directly incinerated only for the purpose of generating steam by means of a heat exchanger and utilizing the steam as a heat source. Thus, such organic waste has not practically been used as an ingredient or resource for other products.

When scrap tires are taken as an example of organic waste, they are composed of 50-60 % of volatiles, 20-30 % of fixed carbon, and 10-15 % of inorganic matter such as steel and ash, as shown in Table 1. Since scrap tires include steel wires, it is difficult to crush them into small pieces. Accordingly, it has been conventional practice to burn whole scrap tires in a stoker or kiln or to crush scrap tires to about 10 cm cubes and burn them in a stoker or kiln. However, these combustion methods involve the following problems:

(1) If scrap tires are burned with the aid of air, volatiles present therein decompose and burn rapidly. As a result, a high temperature of 1,500°C or above is attained locally, tending to cause damage to the furnace. Moreover, large amounts of soot and tar are produced from the flame, requiring after-treatment.

(2) The fixed carbon remaining after the evaporation of volatiles has such a low burning rate that it may form a residue in admixture with inorganic matter. This residue is not easy to dispose of.

(3) On the other hand, if scrap tires are burned with a gaseous mixture of air and combustion exhaust gas, the problem described in the above paragraph (1) is alleviated. However, the problem described in the above paragraph (2) is aggravated owing to an increase in residual fixed carbon. Thus, it is impossible to have an overall solution.

For these reasons, it is difficult to dispose of organic waste such as scrap tires. In the present state of the art, it has been impossible to reclaim resources from such waste.

Table 1:

| Composition of tires | | |
| --- | --- | --- |
| Component | | Content (%) |
| Volatiles | Raw rubber | 40-50 |
| | Oil | 5-10 |
| Fixed carbon | | 20-30 |
| Steel & ash | | 10-15 |

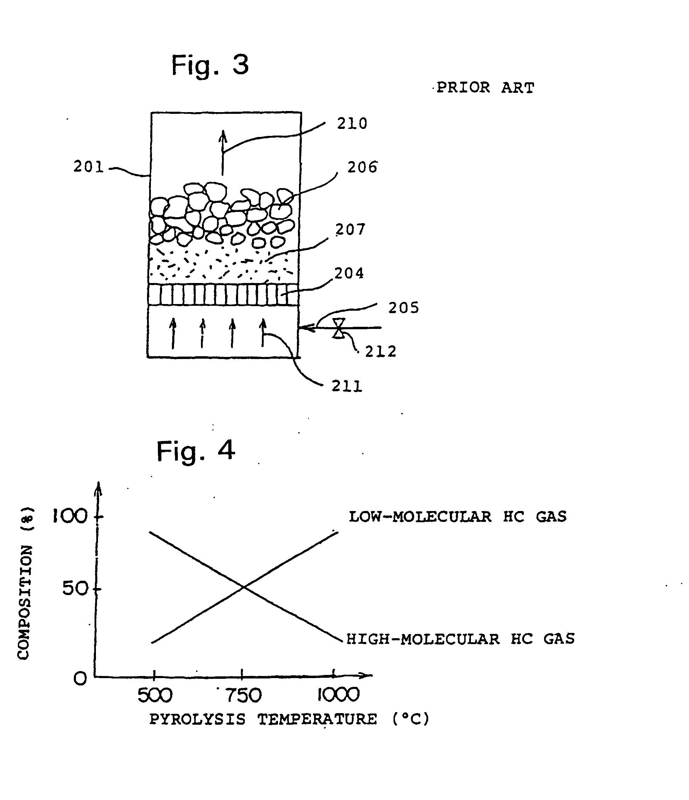

With respect to the present invention, an example of a conventional fixed-bed gasification furnace for gasifying organic waste such as scrap tires and waste plastics is illustrated in Fig. 3. In the fixed-bed gasification furnace 201 of Fig. 3, volatiles present in organic waste 206 fed from above are pyrolyzed and gasified by the heat evolved as a result of the partial combustion of fixed carbon present in the underlying residue, thus yielding a residue 207 consisting largely of fixed carbon. The fixed carbon present in residue 207 is partially burned and gasified with a gasifying agent 211 which is a mixture of an oxygen-containing gas and steam and which is supplied to a space below a perforated plate 204 through a valve 212, and the fixed carbon serves to supply the heat required to pyrolyze the volatiles. The gas produced by the pyrolysis and gasification of volatiles and the gas produced by the gasification of fixed carbon are mixed together and withdrawn as an organic waste-gasified gas 210. The reactions occurring during this process are represented by the following equations (1), (2) and (3).

$$C + O_2 ---> CO + CO_2 + Q_1 \text{ (exothermic)} \tag{1}$$

(Supply of the heat of reaction by the partial
combustion and gasification of fixed carbon)

$$C + H_2O \text{---> } CO + H_2 - Q_3 \text{ (endothermic)} \tag{2}$$

(Gasification by the reaction of fixed carbon
with steam)

$$C_nH_m \text{---> } C_{n1}H_{m1} - Q_2 \text{ (endothermic)} \tag{3}$$

(n > n1, m > m1)

(Pyrolysis and gasification of volatiles)

If the pyrolysis temperature of volatiles is high (e.g., 700°C or above), C-C bonds are severed extensively, so that a low-molecular hydrocarbon gas consisting of low-molecular components such as methane ($CH_4$), ethane ($C_2H_6$) and ethylene ($C_2H_4$) are produced in high proportions. On the other hand, if the pyrolysis temperature is low (e.g., 500-700°C), a high-molecular hydrocarbon gas containing aromatic compounds such as benzene ($C_6H_6$), toluene ($C_7H_8$) and naphthalene ($C_{10}H_8$) is produced. This situation is schematically shown in Fig. 4.

When a gas obtained by the gasification of organic waste is used as the raw material for the formation of carbon black, the gas produced in the gasification furnace is introduced into a combustion furnace for the formation of carbon black, and burned in a low-oxygen environment to form carbon black. During this process, a gas consisting of low-molecular components is predominantly burned by reaction with oxygen, creating a high-temperature field. In this high-temperature field, a high-molecular hydrocarbon gas undergoes dehydrogenation and polycondensation repeatedly and thereby grows to form carbon black. That is, in order to enhance the yield of carbon black, it is preferable to increase the content of high-molecular components, such as naphthalene ($C_{10}H_8$) and anthracene ($C_{14}H_{10}$), in the gas obtained by the gasification of organic waste. To this end, it is preferable to carry out the pyrolysis of volatiles at a temperature of 500-700°C.

If the pyrolysis temperature is higher than 700°C, C-C bonds present in volatiles will be severed extensively to produce low-molecular hydrocarbons, such as methane ($CH_4$), ethane ($C_2H_6$) and ethylene ($C_2H_4$). If it is lower than 500°C, the pyrolysis will not proceed satisfactorily.

Usually, the quantity of heat required to pyrolyze and gasify volatiles at a temperature of 500-700°C will be only about 5-10 of the total quantity of heat possessed by organic waste. Where the content of fixed carbon in organic waste is high (e.g., 20 %), the combustion of all fixed carbon will evolve an excessive quantity of heat.

Thus, where it is desired to produce a high-molecular hydrocarbon gas from volatiles in the gasification of organic waste, the following problems arise. They make it difficult to control the pyrolysis temperature of volatiles so as to remain in an appropriate range.

(1) If the feed rate of oxygen is reduced to decrease the amount of fixed carbon undergoing partial combustion (i.e., the heat of combustion, $Q_1$, of fixed carbon) and thereby lower the pyrolysis temperature, a residue containing fixed carbon is left. This residue is not easy to dispose of.

(2) Contrary, if fixed carbon is partially burned at a sufficiently high feed rate of oxygen so as not to leave any residual fixed carbon, the heat of combustion is increased to raise the pyrolysis temperature. As a result, a high-molecular hydrocarbon gas cannot be obtained.

(3) The reaction temperature can be lowered by adding steam to the gasifying agent. However, if the feed rate of steam is raised to increase the quantity of heat ($Q_3$) absorbed by the reaction of fixed carbon with steam, fixed carbon and unreacted steam react with the high-molecular hydrocarbon gas produced by the pyrolysis of volatiles, resulting in the formation of low-molecular hydrocarbons.

$$C_{n1}H_{m1} + H_2O \text{---> } C_{n2}H_{m2} + CO + H_2 - Q_4 \tag{4}$$

(n1 > n2, m1 > m2)

Furthermore, as noted above, a proper temperature control is required to obtain a gas having a composition suitable for use as the raw material for the production of carbon black. In conventional fixed-bed gasification furnaces, the feed rate of the whole gasifying agent is usually controlled in response to the height of the organic waste layer within the furnace and this involves the following problems.

If the feed rate of organic waste varies, the resulting change in the feed rate of the gasifying agent is delayed because of the time lag of the change in the height of the organic waste layer. This causes the gasifying agent/organic waste ratio to become unbalanced. As a result, the supply of heat by the partial combustion and gasification of fixed carbon according to the above equations (1) and (2) also becomes unbalanced, so that the internal temperature of the gasification furnace may be fluctuated. Thus, the pyrolysis temperature of volatiles depending on equation (3) may be fluctuated to depart from its appropriate range. That is, if the feed rate of organic waste decreases, the gasifying agent/ organic waste ratio temporarily becomes unduly high, resulting a rise in pyrolysis temperature. Contrarily, if the feed rate of organic waste increases, the gasifying agent/organic waste ratio temporarily becomes unduly low, resulting a reduction in pyrolysis temperature. Consequently, the properties of the resulting organic waste gasified gas are fluctuated, bringing about unstable operation of the succeeding process (such as carbon black production process) using that gas.

Also, in order to hold down the pyrolysis temperature of volatiles, the partial combustion/gasification temperature of fixed carbon needs to be held down. Since the reaction rate of fixed carbon is reduced thereby, the organic waste layer becomes thick, requiring a large-sized fixed-bed gasification furnace.

U.S. patent no. 4,321,877 describes a gasification furnace which facilitates the discharge of ash from the bottom of the furnace by agitation of a pull-plate, when the level of accumulated ash exceeds a predetermined limit.

European patent no. 0 297 425 describes a fluidized-bed reactor in which a probe measures a temperature differential between the fluidized-bed and the gas space above. The system thereby regulates the discharge of material from the bottom of the reactor to maintain the height of material within the reactor constant.

U.S. patent no. 5,094,669 describes a gasification furnace in which a pressure difference between an upper region and a lower region of an ash layer in the furnace is used to ascertain and regulate the particle size of the ash generated.

## SUMMARY OF THE INVENTION

It is an object of the present invention, in view of problems associated with fluctuations in the feed rate of the organic waste, to provide a fixed-bed gasification furnace which can lessen fluctuations in the internal temperature of the furnace and thereby maintain a stable pyrolysis temperature, as well as a method for gasifying organic waste by using such a furnace.

According to the present invention, there are provided:

(1) a fixed-bed gasification furnace wherein organic waste charged thereinto is gasified with a supply of a gasifying agent comprising a mixture of an oxygen-containing gas and steam, said furnace comprises means for measuring the height of the layer of organic waste fed to said furnace, means for measuring the internal temperature of said furnace, a controller for controlling the feed rate of the oxygen-containing gas in response to a signal from said means for measuring the height of the organic waste layer, and a controller for controlling the feed rate of steam in response to a signal from said means for measuring the internal temperature of said furnace; and
(2) a method for gasifying organic waste by charging the organic waste into a fixed-bed gasification furnace and gasifying the organic waste with supply of a gasifying agent comprising a mixture of an oxygen-containing gas and steam, which method comprises: controlling the feed rate of the oxygen-containing gas in response to the height of the layer of organic waste fed to said furnace, and controlling the feed rate of steam in response to the internal temperature of said furnace, so as to carry out the gasification.

If the rate of feed of organic waste to the gasification furnace decreases, the height of the organic waste layer is reduced and the oxygen/organic waste ratio temporarily becomes unduly high, resulting in a rise in the internal temperature of the gasification furnace. Accordingly, the height of the organic waste layer within the furnace is measured continuously, and the feed rate of the oxygen-containing gas is decreased in response to a reduction in the height of the layer or organic waste (i.e., a decrease in the amount of organic waste within the furnace) so as to maintain an appropriate oxygen/organic waste ratio. Moreover, the internal temperature of the furnace (i.e., the temperature just above the organic waste layer) is also measured continuously, and the feed rate of steam is increased in response to a rise in temperature so as to suppress the temperature rise.

On the other hand, if the rate of feed of organic waste to the gasification furnace increases, the height of the organic waste layer is raised and the oxygen/organic waste ratio temporarily becomes unduly low, resulting in a drop in the internal temperature of the gasification furnace. Accordingly, the feed rate of the oxygen-containing gas is increased in response to a rise in the height of the organic waste layer (i.e., an increase in the amount of organic waste within the furnace) so as to maintain an appropriate oxygen/organic waste ratio. Moreover, the feed rate of steam is decreased in response to a drop in temperature so as to suppress the temperature drop.

Thus, by controlling the feed rates of the oxygen-containing gas and steam in the gasifying agent independently, the internal temperature of the gasification furnace can be controlled precisely so as to remain substantially constant in spite of variation in the feed rate of organic waste. Consequently, the pyrolysis temperature of volatiles is also kept substantially constant, so that an organic waste-gasified gas containing large amounts of high-molecular hydrocarbon components and having stabilized properties can be produced.

The gasification furnace of the present invention is suitable for use as a gasification furnace in a process for producing carbon black by using organic waste as raw material. However, it is also suitable for use a fixed-bed gasification furnace for gasifying organic waste and coal to recover fuel oils and combustible gases.

BRIEF DESCRIPTION OF THE DRAWINGS

Fig. 1 is a schematic view illustrating an example of the fixed-bed gasification furnace of the present invention;
Figs. 2(a) and 2(b) are graphs showing the state of control of the oxygen and steam feed rates in the example of the present invention (Example 1);
Fig. 3 is a schematic representation of an example of a conventional furnace for the gasification of organic waste; and
Fig. 4 is a graph schematically showing the relationship between the pyrolysis temperature of organic waste and the composition of the gas so produced.

DETAILED DESCRIPTION OF THE PREFERRED EMBODIMENTS

The present invention is more specifically explained with reference to the following example.

(Example 1)

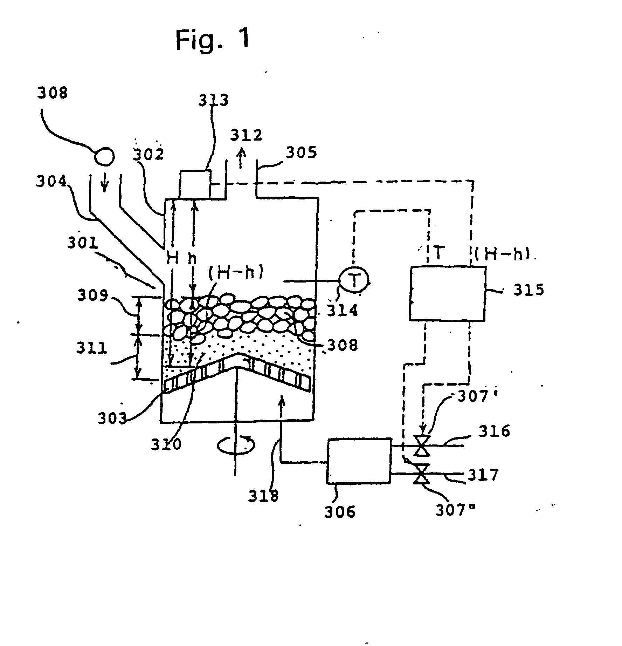

Fig. 1 is a schematic view illustrating an example of the fixed-bed gasification furnace of the present invention. This fixed-bed gasification furnace 301 has an organic waste charging chute 304 connected to the upper part of a cylindrical gasification furnace casing 302, an organic waste-gasified gas outlet 305 provided at the top thereof, and a perforated plate 303 disposed in the lower part thereof and functioning to hold the organic waste charged thereinto and supply a gasifying agent uniformly. To the bottom of gasification furnace casing 302 or its side wall below perforated plate 303 is connected a mixing vessel 306 by way of a pipeline. This mixing vessel 306 serves to prepare a gasifying agent 318 by mixing an oxygen-containing gas 16 and steam 317 supplied through valves 307' and 307", respectively. Perforated plate 303 has a gently sloping umbrella-like shape and is mounted rotatably.

This fixed-bed gasification furnace 301 is equipped with an ultrasonic level meter 313 serving as a means for measuring the height of the layer of organic waste fed to the furnace and also with a thermocouple 314 serving as a means for measuring the internal temperature of the gasification furnace. In addition, a controller 315 is installed which controls the degree of opening of valves 307' and 307" in response to signals from these ultrasonic level meter 313 and thermocouple 314. In Fig. 1, the degree of opening of valves 307' and 307" are controlled by the single controller 315. However, it is a matter of course that valves 307' and 307" may be controlled by two separate controllers.

Using this fixed-bed gasification furnace 301, scrap tires providing a typical example of organic waste were subjected to a gasification test.

As shown in Fig. 1, a gasifying agent 318 was prepared by introducing an oxygen-containing gas 316 and steam 317 into a mixing vessel 306 while regulating their feed rates by means of valves 307' and 307", respectively, and supplied to a space below the rotating perforated plate 303.

Scrap tires (organic waste) 308, which had been cut into chips, were fed through an organic waste charging chute 304, forming a scrap tire layer on perforated plate 303. In a volatiles pyrolysis region 309 corresponding to the upper part of the scrap tire layer, volatiles were pyrolyzed and gasified. The resulting residue 310 consisting largely of fixed carbon moved downward and was partially burned and gasified in a fixed carbon partial combustion/gasification region 311. The gas obtained by the pyrolysis and gasification of volatiles and the gas obtained by the partial combustion and gasification of fixed carbon were mixed together and withdrawn through an organic waste-gasified gas outlet 305 as an organic waste-gasified gas 312.

During this process, the distance (h) between the top of gasification furnace casing 302 and the upper surface of the layer of scrap tires (organic waste) 308 was measured by means of ultrasonic level meter 313. By comparison with the distance (H) between the top of gasification furnace casing 302 and the upper surface of perforated plate 303, the height of the layer of scrap tires (organic waste) 308 was determined as (H-h). In response to the difference between this value and a preset value, controller 315 regulated the feed rate of the oxygen-containing gas by controlling the degree of opening of valve 307'.

Moreover, the internal temperature (T) of the gasification furnace (i.e., the temperature just above the organic waste layer which is almost equal to the temperature of the organic waste-gasified gas) was measured by means of thermocouple 314. In response to the difference between this value and a preset value, controller 315 regulated the feed rate of steam by controlling the degree of opening of valve 307".

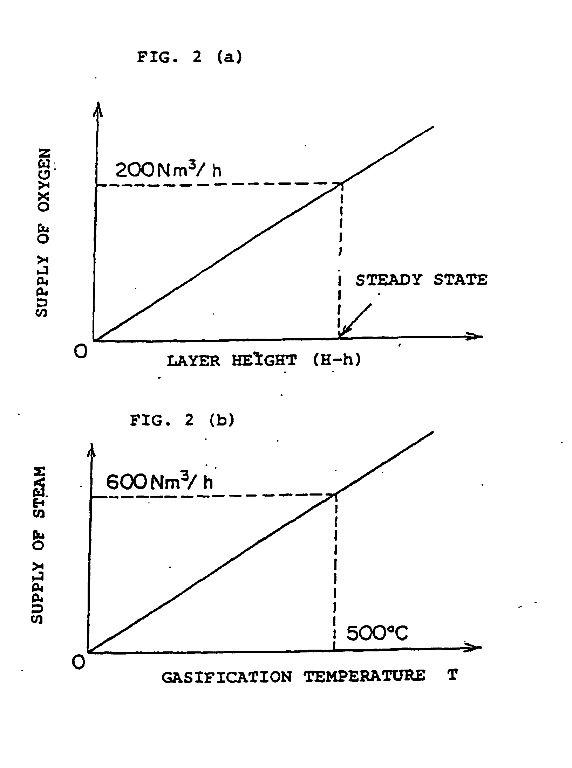

Scrap tires contain 60-70 % by weight of volatiles (such as raw rubber and oil), 20-30 % by weight of fixed carbon, and 10-15% by weight of inorganic components. In order to adjust the internal temperature of the gasification furnace to 500°C, it is preferable that oxygen be supplied in amount as expressed by a molar equivalent ratio ($O_2$/C) of 0.4-0.5 based on the fixed carbon present in scrap tires and that steam be supplied in an amount as expressed by a molar equivalent ratio ($H_2O$/C) of 1.0-1.5 based on the fixed carbon present in scrap tires. In a gasification furnace having a capacity for treating scrap tires at a rate of 1 ton per hour, the feed rates of oxygen and steam are controlled as shown in Fig. 2.

Fig. 2(a) is a graph showing the relationship between the height (H-h) of the scrap tire layer and the oxygen feed rate controlled in response thereto. This graph indicates that the oxygen feed rate is 200 Nm$^3$/h in a steady state (i.e., when the layer height is equal to a preset value) and that the oxygen feed rate is increased as the layer height becomes larger or decreased as the layer height becomes smaller, in response to a deviation from the preset value of the layer height.

Fig. 2(b) is a graph showing the relationship between the internal temperature (T) of the gasification furnace and the steam feed rate controlled in response thereto. This graph indicates that the steam feed rate is 600 Nm$^3$/h when the temperature is equal to a preset value of 500°C and that the steam feed rate is increased as the temperature becomes higher or decreased as the temperature becomes lower, in response to a deviation from the preset value of the temperature.

**Claims**

1. Fixed-bed gasification furnace wherein an organic waste charged thereinto is gasified with a supply of a gasifying agent comprising a mixture of an oxygen-containing gas and steam, the furnace **characterized by**:

   means (313) for measuring the height of a layer of the charged organic waste in the furnace (301),
   means (314) for measuring the internal temperature of the furnace,
   a controller (315) for controlling the feed rate of the oxygen-containing gas in response to a signal from the means (313) for measuring the height of the organic waste layer, and
   a controller (315) for controlling the feed rate of steam in response to a signal from the means for measuring the internal temperature of said furnace.

2. Fixed-bed gasification furnace according to claim 1, **characterized in that** the means (313) for measuring the height of the layer of organic waste in the furnace is an ultrasonic level meter.

3. Fixed-bed gasification furnace according to claim 1 or claim 2, **characterized in that** the means (314) for measuring the internal temperature of the furnace is adapted to measure the temperature just above the layer of organic waste in the furnace.

4. Fixed-bed gasification furnace according to any one of the preceding claims, **characterized in that** the means (314) for measuring the internal temperature of the furnace is a thermocouple.

5. Fixed-bed gasification furnace according to any one of the preceding claims, **characterized in that** the controller (315) for controlling the feed rate of the oxygen-containing gas is adapted to control the degree of opening an oxygen-containing gas supply valve (307').

6. Fixed-bed gasification furnace according to any one of the preceding claim, **characterized in that** the controller (315) for controlling the feed rate of steam is adapted to control the degree of opening of a steam supply valve (307").

7. Fixed-bed gasification furnace according to any one of the preceding claims, **characterized in that** the controller (315) for controlling the feed rate of the oxygen-containing gas and the controller (315) for controlling the feed rate of steam is adapted to maintain the pyrolysis and gasification temperature in the furnace within the range of 500°C to 700°C.

**8.** Method for gasifying organic waste by charging an organic waste into a fixed-bed gasification furnace and gasifying the organic waste with a supply of a gasifying agent comprising a mixture of an oxygen-containing gas and steam, the method **characterized by** the steps of:

controlling the feed rate of the oxygen-containing gas in response to the height of a layer of the charged organic waste in the furnace, and
controlling the feed rate of steam in response to an internal temperature of the furnace, so as to carry out the gasification.

**9.** Method according to claim 8, wherein the steps of controlling the feed rate of the oxygen-containing gas and controlling the feed rate of steam are adapted to maintain the pyrolysis and gasification temperature in the furnace within the range of 500° to 700°C.

**Patentansprüche**

**1.** Festbettvergasungsofen, in dem in ihn gefüllter organischer Abfall durch Zufuhr eines Vergasungsmittels, das ein Gemisch aus einem sauerstoffhaltigen Gas und Dampf umfasst, vergast wird, wobei der Ofen **gekennzeichnet ist durch**:

Mittel (313) zum Messen der Höhe einer Schicht des hineingefüllten organischen Abfalls im Ofen (301),
Mittel (314) zum Messen der Innentemperatur des Ofens,
eine Steuereinheit (315) zum Steuern der Zufuhrrate des sauerstoffhaltigen Gases in Abhängigkeit von einem Signal der Mittel (313) zum Messen der Höhe der organischen Abfallschicht, und
eine Steuereinheit (315) zum Steuern der Zufuhrrate von Dampf in Abhängigkeit von einem Signal der Mittel zum Messen der Innentemperatur des Ofens.

**2.** Festbettvergasungsofen nach Anspruch 1,
**dadurch gekennzeichnet, dass** das Mittel (313) zum Messen der Höhe der Schicht aus organischem Abfall im Ofen ein Ultraschall-Pegelmesser ist.

**3.** Festbettvergasungsofen nach Anspruch 1 oder Anspruch 2,
**dadurch gekennzeichnet, dass** das Mittel (314) zum Messen der Innentemperatur des Ofens dafür ausgelegt ist, die Temperatur direkt über der Schicht aus organischem Abfall im Ofen zu messen.

**4.** Festbettvergasungsofen nach einem der vorhergehenden Ansprüche,
**dadurch gekennzeichnet, dass** das Mittel (314) zum Messen der Innentemperatur des Ofens ein Thermoelement ist.

**5.** Festbettvergasungsofen nach einem der vorhergehenden Ansprüche,
**dadurch gekennzeichnet, dass** die Steuereinheit (315) zum Steuern der Zufuhrrate des sauerstoffhaltigen Gases dafür ausgelegt ist, den Öffnungsgrad eines Zufuhrventils (307') für sauerstoffhaltiges Gas zu steuern.

**6.** Festbettvergasungsofen nach einem der vorhergehenden Ansprüche,
**dadurch gekennzeichnet, dass** die Steuereinheit (315) zum Steuern der Zufuhrrate von Dampf dafür ausgelegt ist, den Öffnungsgrad eines Dampfzufuhrventils (307") zu steuern.

**7.** Festbettvergasungsofen nach einem der vorhergehenden Ansprüche,
**dadurch gekennzeichnet, dass** die Steuereinheit (315) zum Steuern der Zufuhrrate des sauerstoffhaltigen Gases und die Steuereinheit (315) zum Steuern der Zufuhrrate von Dampf dafür ausgelegt sind, die Pyrolyse- und Vergasungstemperatur im Ofen zwischen 500°C und 700°C zu halten.

**8.** Verfahren zum Vergasen von organischem Abfall durch Einfüllen von organischem Abfall in einen Festbettvergasungsofen und Vergasen des organischen Abfalls durch Zufuhr eines Vergasungsmittels, das ein Gemisch aus einem sauerstoffhaltigen Gas und Dampf umfasst, wobei das Verfahren **gekennzeichnet ist durch** die Schritte:

Steuern der Zufuhrrate des sauerstoffhaltigen Gases in Abhängigkeit von der Höhe einer Schicht des eingefüllten organischen Abfalls im Ofen, und

Steuern der Zufuhrrate von Dampf in Abhängigkeit von einer Innentemperatur des Ofens, um die Vergasung durchzuführen.

**9.** Verfahren nach Anspruch 8,
wobei die Schritte des Steuerns der Zufuhrrate des sauerstoffhaltigen Gases und des Steuerns der Zufuhrrate von Dampf dafür ausgelegt sind, die Pyrolyse- und Vergasungstemperatur im Ofen zwischen 500°C und 700°C zu halten.


**Revendications**

**1.** Four de gazéification à lit fixe dans lequel des déchets organiques qui y sont chargés sont gazéifiés au moyen d'une délivrance d'un agent de gazéification comprenant un mélange d'un gaz contenant de l'oxygène et de vapeur, ledit four **caractérisé par** :

un moyen (313) destiné à mesurer la hauteur d'une couche de déchets organiques chargés dans le four (301),
un moyen (314) destiné à mesurer la température intérieure dudit four,
un dispositif de commande (315) destiné à commander le débit d'alimentation en gaz contenant de l'oxygène en réponse à un signal provenant du moyen (313) destiné à mesurer la hauteur de la couche de déchets organiques, et
un dispositif de commande (315) destiné à commander le débit d'alimentation en vapeur en réponse à un signal provenant du moyen destiné à mesurer la température interne dudit four.

**2.** Four de gazéification à lit fixe selon la revendication 1, **caractérisé en ce que** le moyen (313) destiné à mesurer la hauteur de la couche de déchets organiques dans le four est un limnimètre à ultrasons.

**3.** Four de gazéification à lit fixe selon la revendication 1 ou la revendication 2, **caractérisé en ce que** le moyen (314) destiné à mesurer la température interne du four est adapté pour mesurer la température juste au-dessus de la couche de déchets organiques dans le four.

**4.** Four de gazéification à lit fixe selon l'une quelconque des revendications précédentes, **caractérisé en ce que** le moyen (314) destiné à mesurer la température interne du four est un thermocouple.

**5.** Four de gazéification à lit fixe selon l'une quelconque des revendications précédentes, **caractérisé en ce que** le dispositif de commande (315) destiné à commander le débit d'alimentation en gaz contenant de l'oxygène est adapté pour commander le degré d'ouverture d'une vanne d'alimentation en gaz contenant de l'oxygène (307').

**6.** Four de gazéification à lit fixe selon l'une quelconque des revendications précédentes, **caractérisé en ce que** le dispositif de commande (315) destiné à commander le débit d'alimentation en vapeur est adapté pour commander le degré d'ouverture d'une vanne d'alimentation en vapeur (307").

**7.** Four de gazéification à lit fixe selon l'une quelconque des revendications précédentes, **caractérisé en ce que** le dispositif de commande (315) destiné à commander le débit d'alimentation en gaz contenant de l'oxygène et le dispositif de commande (315) destiné à commander le débit d'alimentation en vapeur sont adaptés pour maintenir la température de pyrolyse et de gazéification dans le four dans une plage de 500 °C à 700 °C.

**8.** Procédé destiné à gazéifier des déchets organiques en chargeant des déchets organiques dans un four de gazéification à lit fixe et à gazéifier les déchets organiques en délivrant un agent de gazéification comprenant un mélange d'un gaz contenant de l'oxygène et de vapeur,
le procédé étant **caractérisé par** les étapes consistant à :

commander le débit d'alimentation en gaz contenant de l'oxygène en réponse à la hauteur d'une couche des déchets organiques chargés dans le four, et
commander le débit d'alimentation en vapeur en réponse à une température interne du four, afin d'exécuter la gazéification.

9. Procédé selon la revendication 8, dans lequel les étapes consistant à commander le débit d'alimentation en gaz contenant de l'oxygène et à commander le débit d'alimentation en vapeur sont adaptés pour maintenir la température de pyrolyse et de gazéification dans le four dans une plage de 500 °C à 700 °C.

Fig. 1

FIG. 2 (a)

FIG. 2 (b)

## Fig. 3

201

210

206

207

204

205

212

211

## Fig. 4

COMPOSITION (%)

100

50

0

LOW-MOLECULAR HC GAS

HIGH-MOLECULAR HC GAS

500    750    1000

PYROLYSIS TEMPERATURE (°C)